(19) Europäisches Patentamt
European Patent Office
Office européen des brevets

(11) **EP 2 787 239 A1**

(12) **EUROPEAN PATENT APPLICATION**
published in accordance with Art. 153(4) EPC

(43) Date of publication:
**08.10.2014 Bulletin 2014/41**

(51) Int Cl.:
***F16D 55/224*** (2006.01)

(21) Application number: **11876809.2**

(22) Date of filing: **02.12.2011**

(86) International application number:
**PCT/JP2011/077968**

(87) International publication number:
**WO 2013/080382 (06.06.2013 Gazette 2013/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Toyota Jidosha Kabushiki Kaisha
Toyota-shi, Aichi 471-8571 (JP)**

(72) Inventors:
• **NISHII, Kazutoshi**
  **Toyota-shi**
  **Aichi 471-8571 (JP)**

• **GOMI, Mikio**
  **Toyota-shi**
  **Aichi 471-8571 (JP)**
• **TANOUE, Junichi**
  **Toyota-shi**
  **Aichi 471-8571 (JP)**

(74) Representative: **Winter, Brandl, Fürniss, Hübner,
Röss, Kaiser, Polte - Partnerschaft mbB
Patent- und Rechtsanwaltskanzlei
Bavariaring 10
80336 München (DE)**

(54) **DISC-BRAKE DEVICE AND CALIPERS**

(57)     A disc brake device (1) is characterized by including a disc rotor (2) that rotates around a rotational axis (X1), a friction pad (3, 4) that opposes a friction surface of the disc rotor (2), a first member (6) provided on a fixed portion (60) on a vehicle body side, a second member (70) that is slidably supported via a slide mechanism (8) with respect to the first member (6), and a third member (71) that holds the friction pad (3, 4), and is pivotally supported, with a pivot axis (X2) along a radial direction of the disc rotor (2) as a pivot center, via a pivot mechanism (72) with respect to the second member (70).

FIG.1

**Description**

TECHNICAL FIELD

The invention relates to a disc brake device and a caliper.

BACKGROUND ART

As a related disc brake device and caliper, a pin slide type disc brake in which a slide pin is fixed by a bolt to a lug portion of a caliper is described in Patent Document 1, for example. In this pin slide type disc brake, the slide pin is inserted into a pin hole of a support member such that the caliper is slidably supported in a disc axial direction. With the pin slide type disc brake, a slit is provided in an end surface on a slide pin mounting side of the lug portion of the caliper, and a head portion of the slide pin, which has two parallel flat surfaces, is arranged in this slit. As a result, in this pin slide type disc brake, rotation of the slide pin is stopped by opposing flat surfaces of the slit.

PRIOR ART DOCUMENTS

PATENT DOCUMENTS

Patent Document 1: Japanese Patent Application Publication No. 2005-220942

SUMMARY OF THE INVENTION

PROBLEMS TO BE SOLVED BY THE INVENTION

With a pin slide type disc brake such as that described in Patent Document 1 above, there is room for further improvement in terms of abnormal noise reduction, for example.
In view of the foregoing circumstances, it is an object of the invention to provide a disc brake device and caliper capable of reducing abnormal noise.

MEANS FOR SOLVING THE PROBLEMS

In order to achieve the foregoing object, a disc brake device according to the invention is characterized by including a disc rotor that rotates around a rotational axis, a friction pad that opposes a friction surface of the disc rotor, a first member provided on a fixed portion on a vehicle body side, a second member that is slidably supported via a slide mechanism with respect to the first member, and a third member that holds the friction pad, and is pivotally supported, with a pivot axis along a radial direction of the disc rotor as a pivot center, via a pivot mechanism with respect to the second member.
Also, in the disc brake device described above, the pivot axis may be parallel to a mounting surface of the first member and the fixed portion.
Also, in the disc brake device described above, the pivot axis may pass through the rotational axis of the disc rotor.
Also, in the disc brake device described above, the pivot axis may be orthogonal to the rotational axis of the disc rotor.
Also, the disc brake device described above may include a pressing member that presses the friction pad against the friction surface of the disc rotor, and the pivot axis may pass through a range where the pressing member presses the friction pad, with respect to a circumferential direction of the rotational axis of the disc rotor.
Also, in the disc brake device described above, the slide mechanism may have a recessed portion provided on one of the first member or the second member, a slide pin that is provided on the other of the first member or the second member and is inserted into the recessed portion, and an adjustment mechanism that adjusts a clearance between the recessed portion and the slide pin.
Also, in the disc brake device described above, the adjustment mechanism may reduce the clearance.
Also, in the disc brake device described above, the adjustment mechanism may push the slide pin against an inside wall of the recessed portion.
Also, in the disc brake device described above, the adjustment mechanism may have a pushing portion that is provided on one end portion side of the slide pin, and generates a force that pushes the slide pin against one inside wall of the recessed portion by being pushed against the other of the first member or the second member outside of the recessed portion.
Also, in the disc brake device described above, the adjustment mechanism may have a sleeve that is provided inside the recessed portion, and is interposed between the recessed portion and the slide pin.

Also, in the disc brake device described above, the slide pin may have a hollow portion inside, and the adjustment mechanism may have extension portion that pushes out the slide pin to an outside from inside the hollow portion.

Also, in the disc brake device described above, the adjustment mechanism may have an elastic member that is provided inside the recessed portion, and generates a force that pushes the slide pin against one inside wall of the recessed portion.

In order to achieve the foregoing object, a caliper according to the invention, which is a caliper that holds a friction pad opposing a friction surface of a disc rotor that rotates around a rotational axis, is characterized by including a first member provided on a fixed portion on a vehicle body side, a second member that is slidably supported via a slide mechanism with respect to the first member, and a third member that holds the friction pad, and is pivotally supported, with a pivot axis along a radial direction of the disc rotor as a pivot center, via a pivot mechanism with respect to the second member.

EFFECT OF THE INVENTION

The disc brake device and caliper according to the invention display an effect of being able to suppress abnormal noise.

BRIEF DESCRIPTION OF THE DRAWINGS

[FIG. 1] FIG. 1 is a schematic block diagram showing a disc brake device according to a first example embodiment.
[FIG. 2] FIG. 2 is a sectional view taken along a pivot axis of a caliper of the disc brake device according to the first example embodiment.
[FIG. 3] FIG. 3 is a schematic front view of the caliper of the disc brake device according to the first example embodiment.
[FIG. 4] FIG. 4 is a schematic sectional view illustrating the operation of the disc brake device according to the first example embodiment.
[FIG. 5] FIG. 5 is a chart illustrating one example of the relationship between pin clearance, and rattle noise reduction performance and moan noise reduction performance.
[FIG. 6] FIG. 6 is a view showing a frame format illustrating the operation of a disc brake device according to a comparative example.
[FIG. 7] FIG. 7 is a view showing a frame format illustrating the operation of the disc brake device according to the first example embodiment.
[FIG. 8] FIG. 8 is a view partial sectional view that includes a slide mechanism of a disc brake device according to a second example embodiment.
[FIG. 9] FIG. 9 is a perspective view showing the general structure of an adjustment mechanism of the disc brake device according to the second example embodiment.
[FIG. 10] FIG. 10 is a view showing a frame format illustrating the dimensional relationship of the slide mechanism of the disc brake device according to the second example embodiment.
[FIG. 11] FIG. 11 is a partial sectional view that includes a slide mechanism of a disc brake device according to a third example embodiment.
[FIG. 12] FIG. 12 is a radial sectional view of a slide pin of the disc brake device according to the third example embodiment.
[FIG. 13] FIG. 13 is a partial sectional view that includes a slide mechanism of a disc brake device according to a modified example.
[FIG. 14] FIG. 14 is a radial sectional view of a slide pin of the disc brake device according to the modified example.
[FIG. 15] FIG. 15 is a partial sectional view that includes a slide mechanism of a disc brake device according to a fourth example embodiment.
[FIG. 16] FIG. 16 is a perspective view showing the general structure of a slide pin of the disc brake device according to the fourth example embodiment.
[FIG. 17] FIG. 17 is a radial sectional view of the slide pin of the disc brake device according to the fourth example embodiment.
[FIG. 18] FIG. 18 is a partial sectional view showing the operation of the slide mechanism of the disc brake device according to the fourth example embodiment.
[FIG. 19] FIG. 19 is a partial sectional view that includes a slide mechanism of a disc brake device according to a fifth example embodiment.

[FIG. 20] FIG. 20 is a radial sectional view of a slide pin of the disc brake device according to the fifth example embodiment.

[FIG. 21] FIG. 21 is a partial sectional view that includes a slide mechanism of a disc brake device according to a modified example.

[FIG. 22] FIG. 22 is a radial sectional view of a slide pin of the disc brake device according to the modified example.

MODES FOR CARRYING OUT THE INVENTION

Hereinafter, example embodiments of the invention will be described in detail with reference to the drawings. This invention is not limited to these example embodiments. Also, elements that are able to be substituted and that are easy to substitute by one skilled in the art, or that are substantially the same, are included in the constituent elements of the example embodiments.

[First example embodiment]

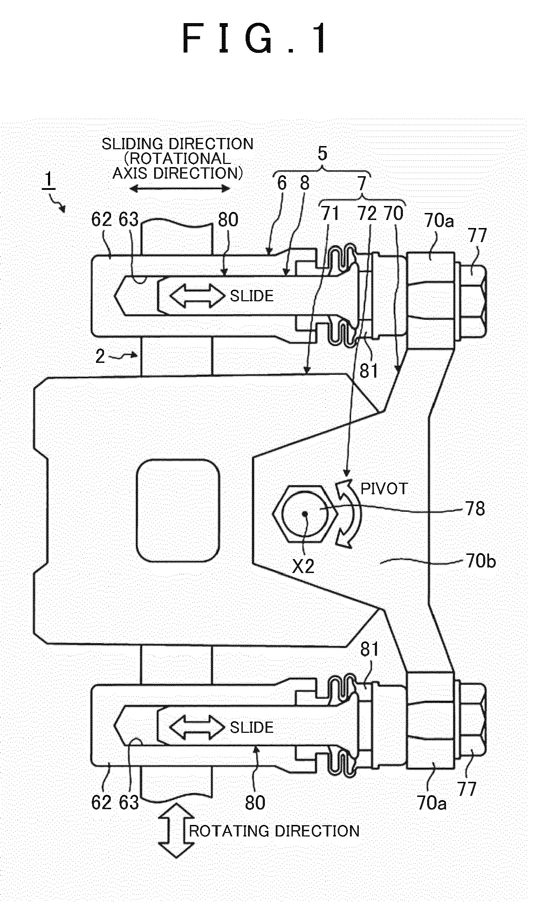

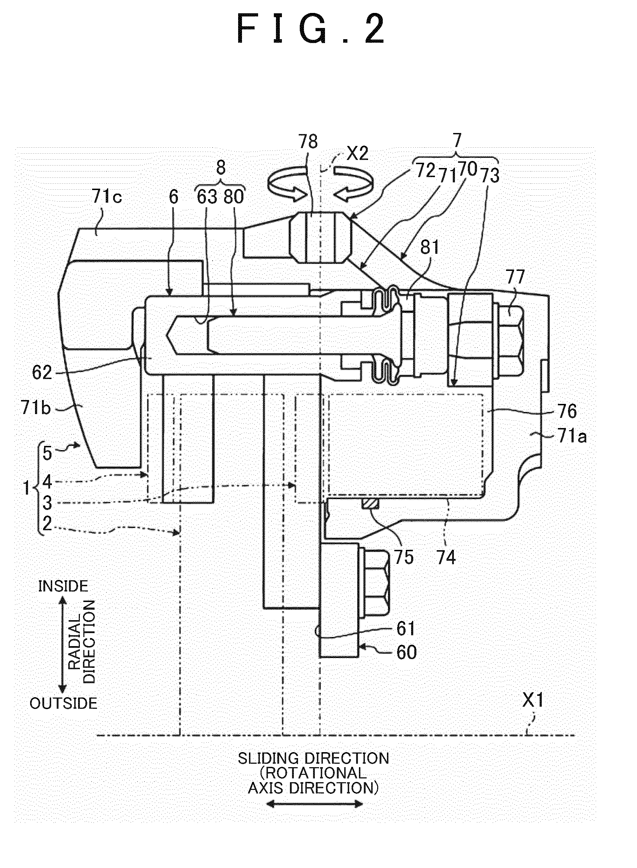

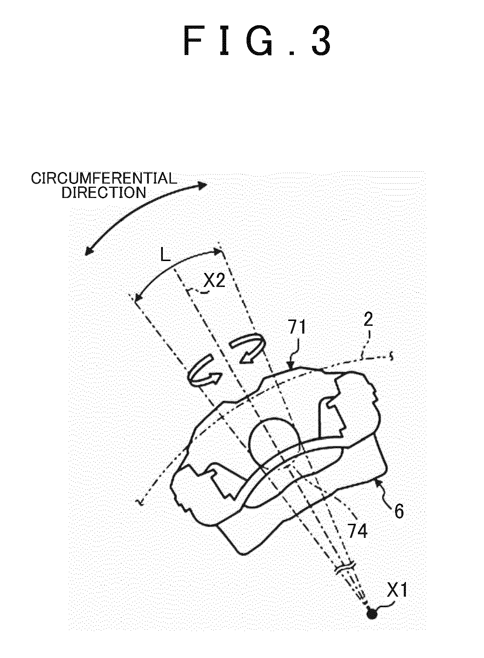

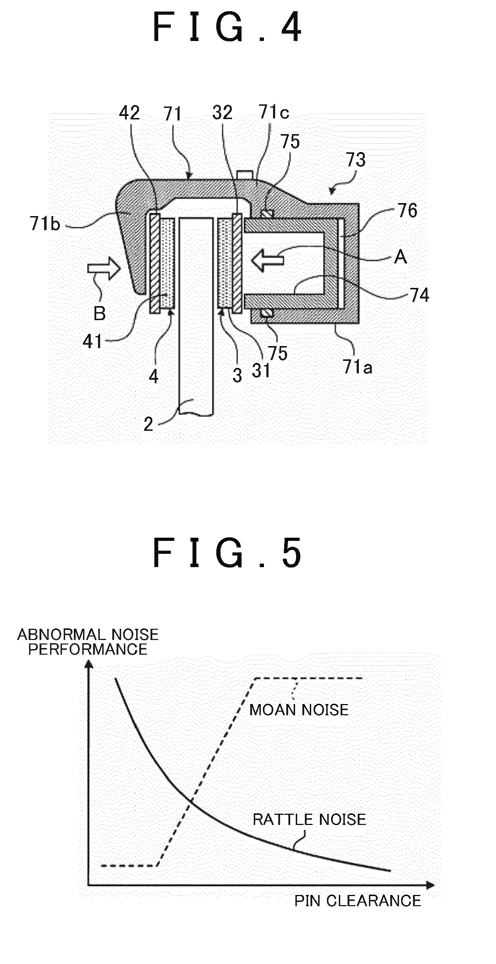

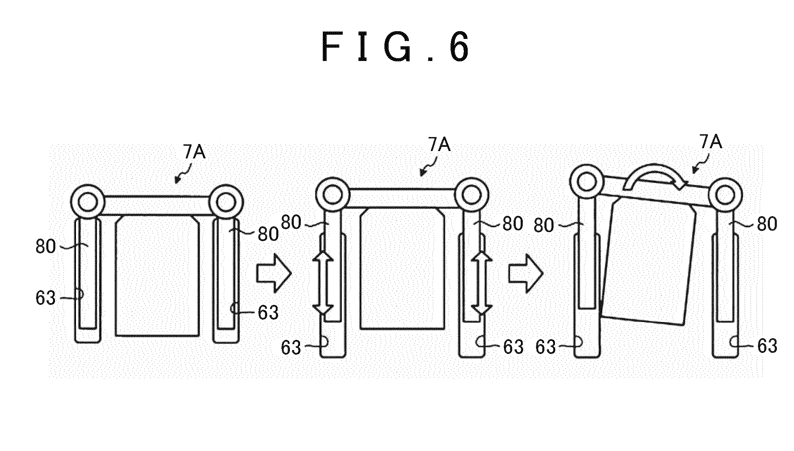

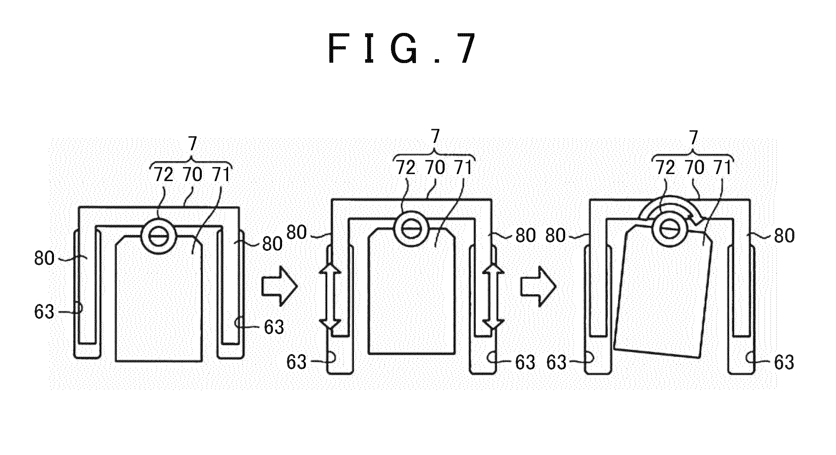

FIG. 1 is a schematic block diagram showing a disc brake device according to a first example embodiment. FIG. 2 is a sectional view taken along a pivot axis of a caliper of the disc brake device according to the first example embodiment. FIG. 3 is a schematic front view of the caliper of the disc brake device according to the first example embodiment. FIG. 4 is a schematic sectional view illustrating the operation of the disc brake device according to the first example embodiment. FIG. 5 is a chart illustrating one example of the relationship between pin clearance, and rattle noise reduction performance and moan noise reduction performance. FIG. 6 is a view showing a frame format illustrating the operation of a disc brake device according to a comparative example. FIG. 7 is a view showing a frame format illustrating the operation of the disc brake device according to the first example embodiment.

A disc brake device 1 of this example embodiment shown in FIG. 1 and FIG. 2 is mounted in a vehicle, and applies braking force to a wheel rotatably supported by a vehicle body of the vehicle. This disc brake device 1 has a floating type caliper 5, and generates braking force by pushing friction pads 3, 4 against a disc rotor 2 with a cylinder 7 that is supported by a mounting 6. In this caliper floating type disc brake device 1, the cylinder 7 is slidably supported in a direction along a rotational axis X1 of the wheel (hereinafter also referred to as "rotational axis direction"), with respect to the mounting 6.

Also, in the disc brake device 1 of this example embodiment, the cylinder 7 has a split structure. In this disc brake device 1, the split members are pivotally connected together in a predetermined positional relationship. By this, the disc brake device 1 aims to suppress abnormal noise generated when running and when braking or the like, for example.

More specifically, the disc brake device 1 includes the disc rotor 2, the pair of friction pads 3, 4, and the caliper 5. The caliper 5 includes the mounting 6 as a first member, the cylinder 7, and a slide mechanism 8. The cylinder 7 includes a first cylinder member 70 as a second member, a second cylinder member 71 as a third member, and a pivot mechanism 72.

The disc rotor 2 is formed in a generally circular disk shape. The disc rotor 2 is integrated with the wheel and is provided on the wheel side so as to be able to rotate around the rotational axis X1 of an axle. That is, the disc rotor 2 rotates with the rotational axis X1 as the center of rotation.

The friction pads 3, 4 are friction members provided in a pair so as to each oppose a friction surface on both sides of the disc rotor 2.

The caliper 5 holds the friction pads 3, 4 opposing the friction surfaces of the disc rotor 2. The caliper 5 is formed including the mounting 6, the cylinder 7, and the slide mechanism 8, and the like, as described above. In the caliper 5, the cylinder 7 holds the friction pads 3, 4. Also, in the caliper 5, this cylinder 7 is slidably supported via the slide mechanism 8 with respect to the mounting 6. As a result, the caliper 5 is able to press these friction pads 3, 4 against the friction surfaces of the disc rotor 2.

More specifically, the mounting 6 is provided on a suspension 60 as a fixed portion on the vehicle body side. The mounting 6 is such that the cylinder 7 is provided so as to be able to slide, i.e., is slidably provided. The mounting 6 is fixed to the vehicle body side via the suspension 60 and an intermediate beam and the like. The mounting 6 is fastened (fixed) via a bolt or the like to a mounting surface 61 of the suspension 60. Here, the mounting surface 61 is a flat surface that is substantially orthogonal to the rotational axis X1.

The mounting 6 has a pair of sleeves 62 on both sides in the front and rear in the rotational direction of the disc rotor 2. Also, the mounting 6 is such that a fitting hole 63 as a recessed portion in which one end portion is open and the other end portion is closed, is formed in each sleeve 62. Each fitting hole 63 is formed extending along the rotational axis direction of the disc rotor 2.

The cylinder 7 is able to move the friction pads 3, 4 close to the disc rotor 2 and push them against the friction surfaces by sliding following a braking operation by a driver, while holding the friction pads 3, 4. The cylinder 7 is formed including the first cylinder member 70, the second cylinder member 71, and the pivot mechanism 72 and the like, as described above, and also includes a pressing actuator 73. The cylinder 7 is such that the first cylinder member 70 and the second cylinder member 71 are formed separately, and these are pivotally connected via the pivot mechanism 72.

The first cylinder member 70 is slidably supported via the slide mechanism 8 with respect to the mounting 6. The first cylinder member 70 is such that a pair of arm portions 70a are provided on both sides on the front and rear in the rotational direction of the disc rotor 2. The first cylinder member 70 is such that a center portion sandwiched by the pair of arm portions 70a forms a protruding portion 70b. The first cylinder member 70 is such that the pair of arm portions 70a and the protruding portion 70b are integrally formed.

Here, the slide mechanism 8 is provided in a pair corresponding to the pair of sleeves 62. Each slide mechanism 8 is a so-called pin slide type mechanism that is formed having the fitting hole 63 described above and a slide pin 80. In each slide mechanism 8, the slide pins 80 are inserted into the fitting holes 63, respectively. Each slide mechanism 8 slidably supports the first cylinder member 70 on the mounting 6 via the slide pin 80 that is inserted into the fitting hole 63. With each slide mechanism 8, the rotational axis direction of the disc rotor 2 corresponds to the sliding direction of the first cylinder member 70 (and thus the entire cylinder 7).

The fitting hole 63 is provided in one of the mounting 6 or the first cylinder member 70, here in the mounting 6, as described above. A total of two of the fitting holes 63 are provided, one in each sleeve 62 of the mounting 6, as described above.

The slide pin 80 is provided on the other of the mounting 6 or the first cylinder member 70, here on the first cylinder member 70. The sliding of the slide pin 80 is guided by the fitting hole 63. The slide pin 80 is formed in a circular cylindrical shape. The length of the slide pin 80 in the sliding direction is set taking wear allowance of the friction pads 3, 4 and the like, for example, into account. A total of two of the slide pins 80 are provided, one on each arm portion 70a of the first cylinder member 70. A base end portion of each slide pin 80 is fixed via a fixing bolt 77 to each corresponding arm portion 70a. A tip end portion of each slide pin 80 is movably inserted into (engaged with) each fitting hole 63.

Therefore, the first cylinder member 70 (and thus the entire cylinder 7) is able to move in the rotational axis direction of the disc rotor 2, that is, along a direction orthogonal to the rotational direction, with respect to the mounting 6, by this slide mechanism 8. Here, clearance between the fitting hole 63 and the slide pin 80 is set as small as possible while still allowing the slide pin 80 to slide.

In each slide mechanism 8, a pin boot 81 is installed between each arm portion 70a and each sleeve 62. The pin boot 81 covers a fitting gap between an end portion of the slide pin 80 and the fitting hole 63. As a result, each slide mechanism 8 is able to prevent foreign matter from getting into the fitting hole 63, and the like by this pin boot 81.

The second cylinder member 71 holds the friction pads 3, 4, and is pivotally supported, with a pivot axis X2 along a radial direction of the disc rotor 2, via the pivot mechanism 72 with respect to the first cylinder member 70. The second cylinder member 71 has a U-shape that straddles the disc rotor 2 (also see FIG. 4). The second cylinder member 71 is equipped with the pressing actuator 73. The pressing actuator 73 is formed by an actuator in which a piston 74 as a pressing member is able to move back and forth.

More specifically, the second cylinder member 71 is formed including a cylinder portion 71a, a rear cushion portion 71b, and a connecting portion 71c (also see FIG. 4). The cylinder portion 71a is provided with the pressing actuator 73. The rear cushion portion 71b is arranged in a position opposing the cylinder portion 71a and sandwiching the disc rotor 2. The connecting portion 71c connects the cylinder portion 71a to the rear cushion portion 71b. The second cylinder member 71 is such that the cylinder portion 71a, the rear cushion portion 71b, and the connecting portion 71c are integrally formed.

The pair of friction pads 3, 4 described above is such that the friction pad 3 is arranged on the cylinder portion 71a side of the second cylinder member 71 and forms an inner pad, and the friction pad 4 is arranged on the rear cushion portion 71b side and forms an outer pad. The friction pads 3, 4 are formed with base end portions of friction elements 31, 41 (see FIG. 4) fixed to back plates 32, 42 (see FIG. 4). The friction pad 3 is such that front and rear end portions of the back plate 32 are supported by a pair of guide members or the like. The friction pad 3 is such that a front surface of the piston 74 of the pressing actuator 73 installed in the cylinder portion 71a contacts a base end surface of the back plate 32. Meanwhile, the friction pad 4 is such that the back plate 42 is fixedly or movably supported by the rear cushion portion 71b.

The pivot mechanism 72 pivotally supports, with the pivot axis X2 along the radial direction of the disc rotor 2 as the pivot center, the second cylinder member 71 on the first cylinder member 70. The pivot mechanism 72 has a pivot shaft 78. The pivot shaft 78 is formed in a circular cylindrical shape, and the center axis of the circular cylinder forms the pivot axis X2. In the pivot mechanism 72, the pivot shaft 78 relatively pivotally supports the second cylinder member 71 on the first cylinder member 70. In other words, the pivot mechanism 72 is such that the first cylinder member 70 and the second cylinder member 71 are relatively pivotally connected by the pivot shaft 78.

The pivot axis X2 is an axis that is the center of rotation of the second cylinder member 71 with respect to the first cylinder member 70 when braking. The pivot axis X2 is set so as to be parallel to a radial direction of the disc rotor 2. Here, the radial direction of the disc rotor 2 is a direction along a plane orthogonal to the rotational axis X1. The pivot axis X2 in this example embodiment is parallel to the mounting surface 61 of the suspension 60 and the mounting 6, and here is positioned substantially on the mounting surface 61. More specifically, the pivot axis X2 passes through the rotational axis X1 of the disc rotor 2, and is orthogonal to this rotational axis X1, as shown in FIG. 3. Also, the pivot axis X2 passes through a range (hereinafter, also referred to as "press range") L where the piston 74 presses the friction pad 3, with respect to a direction around the rotational axis X1 (hereinafter, also referred to as "rotational axis circumferential direction") of the disc rotor 2. The press range L corresponds to an angular range of a region (a region of an abutting surface of the piston 74) where the piston 74 presses with a point on the rotational axis X1 as a reference, in the rotational axis circumferential direction. That is, the pivot axis X2 is set to a position that overlaps with the piston 74 in a vehicle side view and passes through the rotational axis X1. More preferably, the pivot axis X2 is preferably set to a position that passes through the rotational axis X1 and the center position (center of the pressure load) of the region where the piston 74 presses, and is parallel to the radial direction of the disc rotor 2. The pivot axis X2 preferably passes through the center of the pressure load of all of a plurality of abutting surfaces, when the piston 74, or the abutting surface of the piston 74, is provided in plurality, for example. In the pivot mechanism 72, the pivot shaft 78 is formed such that the pivot axis X2 is in the positional relationship described above. Therefore, with the pivot mechanism 72, the pivot axis X2 is able to be appropriately set to a position that is the rotational center of the second cylinder member 71 when the friction pads 3, 4 contact the friction surfaces of the disc rotor 2.

The pivot shaft 78 is provided on one of the first cylinder member 70 or the second cylinder member 71. Here, the pivot shaft 78 is provided on the first cylinder member 70, and is configured to relatively pivotally support the second cylinder member 71 on the first cylinder member 70 by being inserted into a shaft hole formed in the second cylinder member 71.

Also, the pressing actuator 73 is such that the piston 74 is movably supported by the cylinder portion 71a, as shown in FIG. 2 and FIG. 4. In the pressing actuator 73, a seal mechanism 75 capable of sealing with respect to the outside surface of the piston 74 is installed on an inside surface of the cylinder portion 71a. The piston 74 is a pressing member that presses the friction pad 3 against the friction surface of the disc rotor 2. Also, in the pressing actuator 73, a hydraulic chamber (so-called wheel cylinder) 76 as a pushing pressure chamber is formed by the cylinder portion 71a, the piston 74, and the seal mechanism 75. In the pressing actuator 73, a tip end portion of the piston 74 opposes the back plate 32 of the friction pad 3. The hydraulic chamber 76 is supplied with operating oil as an operating medium to generate force that pushes the friction pads 3, 4 against the friction surfaces of the disc rotor 2.

The disc brake device 1 structured as described above is pressurized by operating oil being supplied to the hydraulic chamber 76 of the pressing actuator 73 according to brake control such as so-called ABS brake control, or a depression operation of a brake pedal by the driver or the like, for example. When this happens, the piston 74 of the disc brake device 1 advances in the direction of arrow A in FIG. 4, and the front surface of this piston 74 pushes the back plate 32 of the friction pad (inner pad) 3. As a result, the disc brake device 1 is able to move the front surface of the friction pad 3 closer to the friction surface of the disc rotor 2. Also at this time, the first cylinder member 70, the second cylinder member 71, and the pivot mechanism 72 and the like become a single unit by the movement reaction force of the piston 74 advancing, and advance in the opposite direction of this piston 74, that is, in the direction of arrow B in FIG. 4, such that the pressing surface of the friction pad (outer pad) 4 is able to be moved closer to the friction surface of the disc rotor 2.

Then, in the disc brake device 1, the friction pads 3, 4 are pushed against the friction surfaces of the disc rotor 2, sandwiching the disc rotor 2, by the pushing force generated by the operating oil being supplied into the hydraulic chamber 76. Therefore, in the disc brake device 1, frictional resistance is generated between the friction pads 3, 4, and the disc rotor 2 that rotates together with the wheel, such that a predetermined rotational resistance acts on the disc rotor 2. As a result, the disc brake device 1 is able to apply braking force to the disc rotor 2 and the wheel that rotates integrally with this. Also, in the disc brake device 1, when depressurizing the hydraulic chamber 76, the piston 74 and the cylinder 7 retreat and return to a predetermined position, such that the friction pads 3, 4 move away from the disc rotor 2.

During this, in the disc brake device 1, the entire cylinder 7 slides with respect to the mounting 6, as described above, by the slide pins 80 of the slide mechanism 8 sliding in the rotational axis direction of the disc rotor 2 while fitted in the fitting holes 63. As a result, in the disc brake device 1, the entire cylinder 7 and the piston 74 move relative each other in opposite directions as described above, while being guided by the slide mechanism 8. The cylinder 7 is able to move to a braking position in which the friction pads 3, 4 are pushed against the friction surfaces of the disc rotor 2, and a non-braking position in which the friction pads 3, 4 are moved away from the friction surfaces, by the slide mechanism 8.

Also, in the disc brake device 1 of this example embodiment, the mounting 6 and the first cylinder member 70 are slidably connected via the slide mechanism 8, and the first cylinder member 70 and the second cylinder member 71 are pivotally connected via the pivot mechanism 72. Therefore, the disc brake device 1 is able to reduce so-called moan noise, and is also able to reduce so-called rattle noise. Thus, the disc brake device 1 is able to reduce moan noise and reduce rattle noise at the same time, and thus is able to properly reduce abnormal noise. As a result, the disc brake device 1 is able to suppress a variety of abnormal noises generated when running and when braking and the like, for example.

Here, a rattle noise is a hammering noise generated when the vehicle is running. This rattle noise may be generated by the cylinder 7 moving as a result of up and down G or the like input from a road surface when the vehicle is running on a rough road surface, for example, and the slide pin 80 consequently striking an inside wall surface of the fitting hole 63, when the disc brake device 1 is not generating braking force.

With respect to this, the slide mechanism 8 of this example embodiment is able to reliably restrain the slide pin 80 inside the fitting hole 63 by making the clearance between the fitting hole 63 and the slide pin 80 as small as possible while still allowing the slide pin 80 to slide. As a result, this slide mechanism 8 is able to reduce the striking velocity when the slide pin 80 strikes inside the fitting hole 63, and thus reduce the striking energy, which enables the rattle noise to be reduced. In this case, in the slide mechanism 8, the tolerance between the inside diameter of the fitting hole 63 and the outside diameter of the slide pin 80 may be set to a tolerance range that is a loose fit.

Also in this case, the slide mechanism 8 is able to reliably restrain the slide pin 80 inside the fitting hole 63, so the stability of the cylinder 7 with respect to the disc rotor 2 is also able to be sufficiently ensured. As a result, the slide mechanism 8 is able to reliably hold the cylinder 7 in the proper position when in the non-braking state, so dragging of the friction pads 3, 4 and the like is also able to be reliably suppressed.

On the other hand, a moan noise is a self-excited vibration noise (creaking noise) of approximately several hundred Hz generated when the vehicle brakes. This moan noise may be generated by, for example, the contact portions of the friction pads 3, 4 and the disc rotor 2 becoming a source of vibration, and the intermediate beam and the suspension 60 and the like forming a coupled vibration system (vibration transmitting system) via the cylinder 7, the slide pin 80, and the mounting 6 and the like, such that self-excited vibration is generated, when the disc brake device 1 is generating braking force. This coupled vibration system of the disc brake device 1 and the suspension 60 and the like may be formed by the slide pin 80 consequently being forcibly aggravated inside the fitting hole 63 when the friction pads 3, 4 contact the disc rotor 2 and generate braking force.

This moan noise is able to be reduced by increasing the clearance around the slide pin 80 to suppress aggravation of the slide pin 80 inside the fitting hole 63, for example. However in this case, reliably restraining the slide pin 80 inside the fitting hole 63 is contradictory to the countermeasure for rattle noise as described above, so this may not be able to be achieved at the same time that the rattle noise is reduced.

That is, as exemplified in FIG. 5, when the clearance around the slide pin 80 is simply reduced, rattle noise reduction performance can be improved, but on the other hand, the moan noise reduction performance tends to decrease. Meanwhile, if the clearance around the slide pin 80 is simply increased, moan noise reduction performance can be improved, but on the other hand, rattle noise reduction performance tends to decrease. As a result, both rattle noise reduction and moan noise reduction may not be able to be achieved at the same time.

With the moan noise, even if a countermeasure is performed by providing a mass damper or the like to offset the resonance point, for example, only the frequency of the moan noise will change, so it will not be a fundamental countermeasure.

However, the caliper 5 of the disc brake device 1 of this example embodiment is such that the slide mechanism 8 that slidably connects the mounting 6 to the first cylinder member 70, and the pivot mechanism 72 that pivotally connects the first cylinder member 70 to the second cylinder member 71 are formed separately. That is, the caliper 5 is such that the slide mechanism 8 and the pivot mechanism 72 are provided in different positions and are arranged separated. As a result, in the caliper 5, the clearance around the slide pin 80 is able to made as small as can be manufactured, for example, after suppressing aggravation of the slide pin 80 inside the fitting hole 63 by pivoting the first cylinder member 70 and the second cylinder member 71 with the pivot mechanism 72 when braking.

That is, in the cylinder 7, when the friction pads 3, 4 contact the friction surfaces of the disc rotor 2 when the vehicle brakes, the second cylinder member 71 pivots with the pivot axis X2 that has been set to a positional relationship such as that described above, as the pivot center. At this time, the second cylinder member 71 pivots with the pivot axis X2 as the pivot center, together with the friction pads 3, 4 and the like, with respect to the first cylinder member 70. As a result, in the caliper 5, pivoting behavior of the friction pads 3, 4 and the second cylinder member 71 that occurs when the vehicle brakes is able to be suitably allowed to escape by the pivot mechanism 72, so aggravation of the slide pin 80 is able to be inhibited from occurring in the fitting hole 63. Therefore, the formation of a coupled vibration system such as that described above is able to be suppressed by the disc brake device 1 and the suspension 60 and the like, so the disc brake device 1 is able to reduce the moan noise without the rattle noise reduction performance worsening. In other words, the disc brake device 1 is able to suppress a decrease in the moan noise performance, even when reducing the rattle noise by reducing the clearance around the slide pin 80.

Here, FIG. 6 shows a frame format of the operation of a disc brake device according to a comparative example. In this case, with the disc brake device according to the comparative example, a cylinder 7A is not split. In the disc brake device of this comparative example, the cylinder 7A is slidably supported by a slide pin 80. Also, the disc brake device of this comparative example is configured with a pivot mechanism provided on a connecting portion of this slide pin 80 and the cylinder 7A. In this case, in the disc brake device according to the comparative example, pivoting of the cylinder 7A and the like is allowed by the pivot mechanism of the connecting portion of the slide pin 80 and the cylinder 7A.

However, with the disc brake device according to this comparative example, when the cylinder 7A pivots from an initial position (see the left stage and middle stage in FIG. 6) and is inclined with respect to the slide pin 80 (see the right stage in FIG. 6), the clearance between the fitting hole 63 and the slide pin 80 becomes narrow, and slight aggravation may occur.

In contrast, as exemplified in FIG. 7, the disc brake device 1 of this example embodiment is such that the first cylinder member 70 and the second cylinder member 71 are formed separately, and the slide mechanism 8 and the pivot mechanism 72 are provided separated, such that a relatively large allowable pivot angle of the second cylinder member 71 is able to be ensured by the pivot mechanism 72. As a result, in the disc brake device 1, even when the second cylinder member 71 pivots from the initial position (see the left stage and the middle stage in FIG. 7) and is inclined with respect to the first cylinder member 70 (see the right stage in FIG. 7), the rotating behavior of the friction pads 3, 4 and the second cylinder member 71 is able to reliably escape, so the clearance between the fitting hole 63 and the slide pin 80 is able to be inhibited from becoming narrow. Therefore, the disc brake device 1 is able to more reliably inhibit aggravation from occurring, and thus is able to drastically improve moan noise reduction performance. In this case, the pivot mechanism 72 may be provided with a pivot restricting portion or the like such that [the allowable pivot angle of the second cylinder member 71] becomes equal to or greater than [the maximum braking force (N) of the disc brake device 1 / the torsional rigidity of the mounting 6 (N / deg)].

Therefore, the disc brake device 1 is able to solve the contradicting problem described above, and is able to achieve both a reduction in moan noise and a reduction in rattle noise at the same time, and thus is able to appropriately reduce abnormal noise.

Also, for example, the disc brake device 1 is also able to reduce rattle noise and moan noise by interposing an absorbing member between the fitting hole 63 and the slide pin 80 of the slide mechanism 8. However, in this case, sliding resistance increases when the slide pin 80 slides, and as a result, the friction pads 3, 4 end up being dragged, and so-called brake vibration may occur.

However, this disc brake device 1 achieves both a reduction of rattle noise and a reduction of moan noise at the same time by connecting the mounting 6 and the first cylinder member 70 via the slide mechanism 8, and connecting the first cylinder member 70 and the second cylinder member 71 via the pivot mechanism 72. Therefore, the disc brake device 1 is able to achieve both a reduction in rattle noise and a reduction in moan noise at the same time, while suppressing dragging and brake vibration when the slide pin 80 slides, as described above.

Also, this disc brake device 1 allows the second cylinder member 71 to pivot with respect to the first cylinder member 70 by the pivot mechanism 72, so even if high accuracy regarding the mounting accuracy of the cylinder 7 and the flatness accuracy of the friction pads 3, 4 and the like is not ensured, braking force can still be appropriately applied to the wheel, and manufacturing costs can be reduced, for example.

With the disc brake device 1 according to the example embodiment described above, the disc rotor 2, the friction pads 3, 4, the mounting 6, the first cylinder member 70, and the second cylinder member 71 are provided. The disc rotor 2 rotates around the rotational axis X1. The friction pads 3, 4 oppose the friction surfaces of the disc rotor 2. The mounting 6 is provided on the suspension 60 on the vehicle body side. The first cylinder member 70 is slidably supported via the slide mechanism 8 with respect to the mounting 6. The second cylinder member 71 holds the friction pads 3, 4. The second cylinder member 71 is pivotally supported, with the pivot axis X2 along the radial direction of the disc rotor 2 as the pivot center, via the pivot mechanism 72 with respect to the first cylinder member 70. The mounting 6, the first cylinder member 70, and the second cylinder member 71 form the caliper 5.

Therefore, the disc brake device 1 and the caliper 5 are able to achieve both a reduction of rattle noise and a reduction of moan noise at the same time, and thus are able to appropriately reduce abnormal noise, by having the first cylinder member 70 and the second cylinder member 71 be formed separately, and allowing the second cylinder member 71 to pivot with respect to the first cylinder member 70 by the pivot mechanism 72. As a result, the disc brake device 1 and the caliper 5 are able to appropriately reduce so-called NV (Noise-Vibration, noise and vibration).

[Second example embodiment]

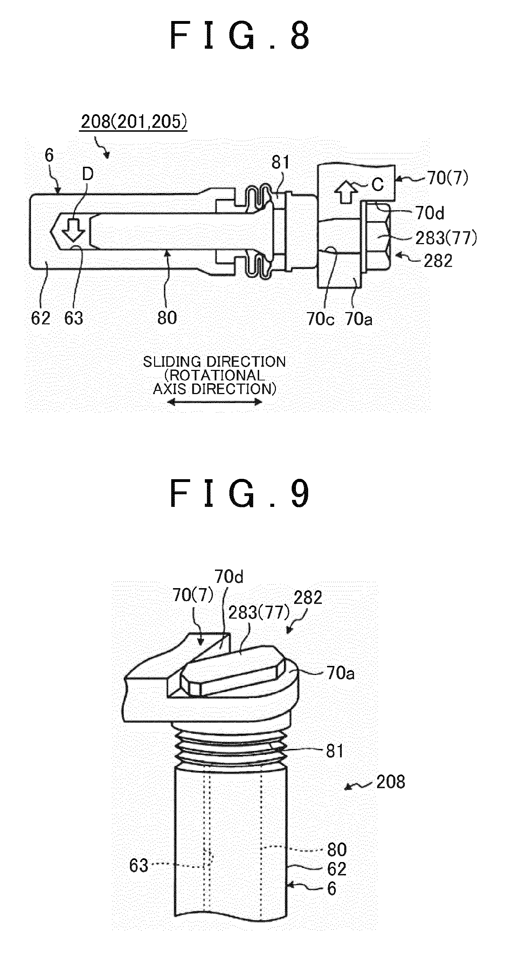

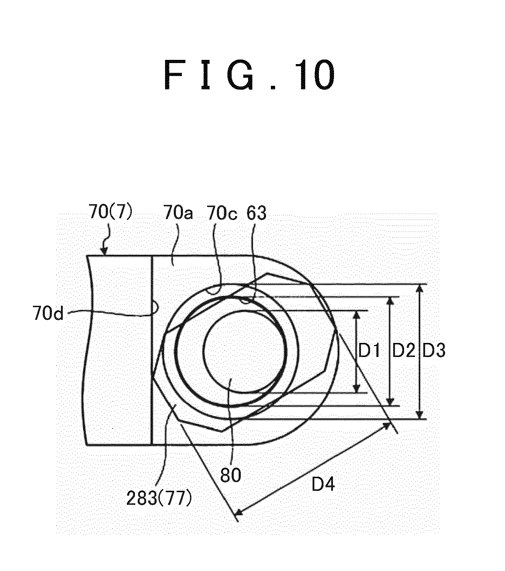

FIG. 8 is a view partial sectional view that includes a slide mechanism of a disc brake device according to a second example embodiment. FIG. 9 is a perspective view showing the general structure of an adjustment mechanism of the disc brake device according to the second example embodiment. FIG. 10 is a view showing a frame format illustrating the dimensional relationship of the slide mechanism of the disc brake device according to the second example embodiment. The disc brake device and caliper according to the second example embodiment differ from the first example embodiment in that they include an adjustment mechanism. Other than this, redundant descriptions of structure, operation, and effects common to the example embodiment described above will be omitted as much as possible. Refer to FIG. 1 and FIG. 2 as appropriate (the same in the example embodiments hereinafter as well) for details about each of the structures of the disc brake device according to the second example embodiment.

As shown in FIG. 8, a caliper 205 of a disc brake device 201 of this example embodiment includes a slide mechanism 208. The slide mechanism 208 of this example embodiment is formed having a fitting hole 63 and a slide pin 80, as well as an adjustment mechanism 282.

The adjustment mechanism 282 adjusts the clearance between the fitting hole 63 and the slide pin 80. The adjustment mechanism 282 of this example embodiment adjusts the clearance between the fitting hole 63 and the slide pin 80 by pushing the slide pin 80 against one inside wall of the fitting hole 63.

The adjustment mechanism 282 has a pushing portion 283, as shown in FIG. 8 and FIG. 9. The pushing portion 283 is provided on one end portion side of the slide pin 80. Here, the pushing portion 283 is formed by a fixing bolt 77. The pushing portion 283 is formed by the fixing bolt (hexagon bolt) 77 having a narrow width portion and a wide width portion, as widths across flat that are parallel to each other.

Here, the dimensional relationship of the slide mechanism 208 will be described with reference to FIG. 10. In the drawing, a pin diameter D1 denotes an outside diameter of the slide pin 80. A fitting hole diameter D2 denotes an inside diameter of the fitting hole 63. A bolt hole diameter D3 denotes an inside diameter of a bolt hole 70c formed in the arm portion 70a of the first cylinder member 70. A width across flat D4 denotes a width across flat of the wide width portion of the fixing bolt 77 that forms the pushing portion 283. The slide mechanism 208 of this example embodiment is such that the dimensional relationship of the pin diameter D1, the fitting hole diameter D2, the bolt hole diameter D3, and the width across flat D4 is set so as to satisfy Expression (1) below.

$$D1 < D2 < D3 < D4 \ldots (1)$$

Therefore, the adjustment mechanism 282 is able to generate force that pushes the slide pin 80 against one inside wall of the fitting hole 63, by the pushing portion 283 being pushed against the first cylinder member 70 of the cylinder 7 outside the fitting hole 63. This pushing force is set to be a force in opposite directions in the pair of slide mechanisms 208. The adjustment mechanism 282 abuts the fixing bolt 77 that forms the pushing portion 283 against a stepped portion 70d of the arm portion 70a while rotating it. As a result, the adjustment mechanism 282 is able to push the slide pin 80 against the inside wall on the opposite side of the fitting hole 63, by reaction force generated by pushing the fixing bolt 77 against the stepped portion 70d, as shown by arrows C and D in FIG. 8. In other words, the adjustment mechanism 282 pushes the slide pin 80 against the inside wall of the fitting hole 63, by providing the stepped portion 70d as a rotation stopper on the arm portion 70a, and fastening the arm portions 70a and the slide pin 80 with the fixing bolt 77 that has a relatively wide width across flat.

As a result, the slide mechanism 208 is able to reliably restrain the slide pin 80 inside the fitting hole 63 by the adjustment mechanism 282, even without making the clearance between the fitting hole 63 and the slide pin 80 as small as possible in the machining stage, for example. When taking a reduction in the rattle noise into account, for example, the clearance between the fitting hole 63 and the slide pin 80 is preferably zero, but in actuality, there is tolerance, so making it zero is difficult. With respect to this, the disc brake device 201 and the caliper 205 are able to more reliably restrain the slide pin 80 inside of the fitting hole 63 by the adjustment mechanism 282 in the slide mechanism 208, and so are able to further improve rattle noise reduction performance.

Also, in the disc brake device 201 and the caliper 205 of this example embodiment, the clearance between the fitting hole 63 and the slide pin 80 is adjusted by the adjustment mechanism 282, so high accuracy regarding the manufacturing of the fitting hole 63 and the slide pin 80 and the like is not necessary, so manufacturing costs can be reduced, for example.

The disc brake device 201 and the caliper 205 according to the example embodiment described above are able to achieve both a reduction of rattle noise and a reduction of moan noise at the same time, and thus are able to appropriately reduce abnormal noise, by having the first cylinder member 70 and the second cylinder member 71 be formed separately, and allowing the second cylinder member 71 to pivot with respect to the first cylinder member 70 by the pivot mechanism 72.

Also, in the disc brake device 201 and the caliper 205 according to the example embodiment described above, the slide mechanism 208 has the adjustment mechanism 282 that adjusts the clearance between the fitting hole 63 and the slide pin 80. Therefore, the disc brake device 201 and the caliper 205 are able to reliably restrain the slide pin 80 inside the fitting hole 63 with the adjustment mechanism 282, and thus are able to further improve rattle noise reduction performance, even if the manufacturing accuracy of the fitting hole 63 and the slide pin 80 and the like is low.

[Third example embodiment]

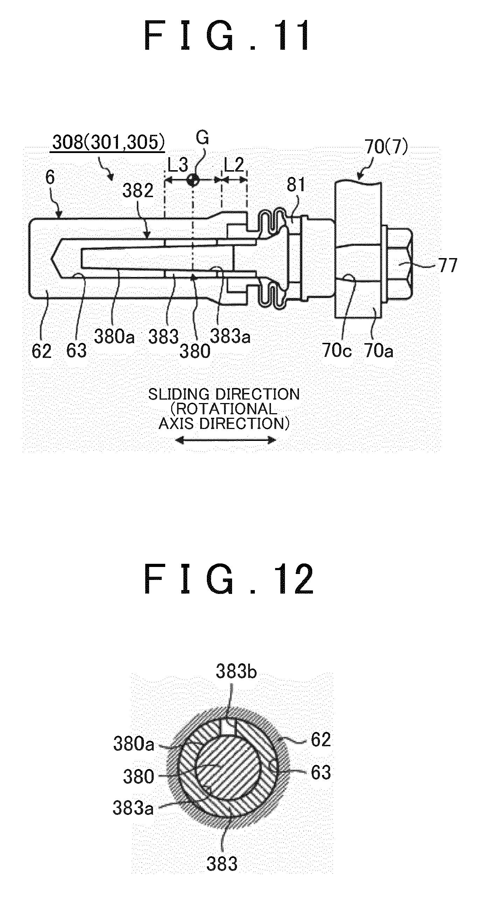

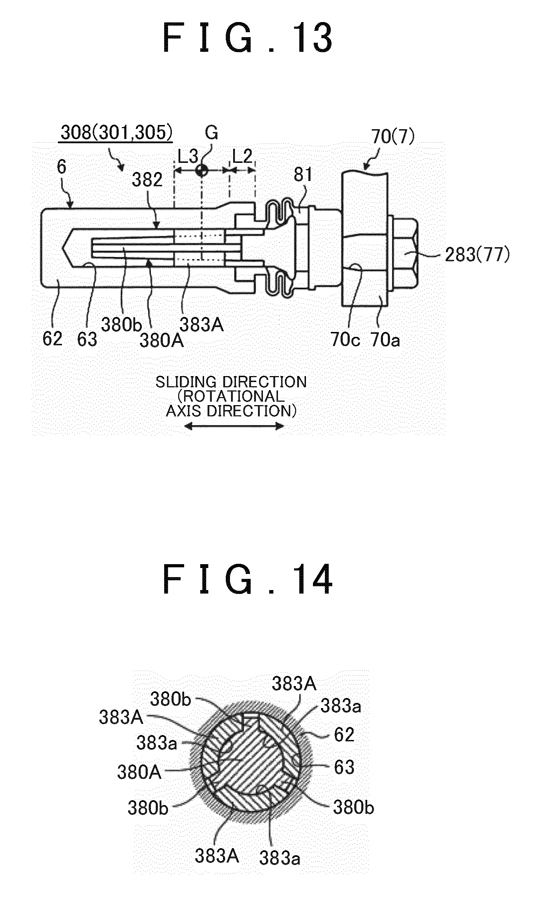

FIG. 11 is a partial sectional view that includes a slide mechanism of a disc brake device according to a third example embodiment. FIG. 12 is a radial sectional view of a slide pin of the disc brake device according to the third example embodiment. FIG. 13 is a partial sectional view that includes a slide mechanism of a disc brake device according to a modified example. FIG. 14 is a radial sectional view of a slide pin of the disc brake device according to the modified example. The structure of the adjustment mechanism of the disc brake device and the caliper according to the third example embodiment differs from that in the second example embodiment.

As shown in FIG. 11 and FIG. 12, a caliper 305 of a disc brake device 301 of this example embodiment includes a slide mechanism 308. The slide mechanism 308 of this example embodiment is formed having a fitting hole 63 and a slide pin 380, as well as an adjustment mechanism 382.

The adjustment mechanism 382 adjusts the clearance between the fitting hole 63 and the slide pin 380. The adjustment mechanism 382 of this example embodiment is a clearance reducing mechanism that adjusts the clearance between the fitting hole 63 and the slide pin 380 by reducing this clearance.

The adjustment mechanism 382 has a sleeve 383. The sleeve 383 is provided inside the fitting hole 63, and is interposed between the fitting hole 63 and the slide pin 380. The sleeve 383 is formed in a circular cylindrical shape, and a taper is formed on an inner peripheral surface.

The sleeve 383 is formed such that an outside diameter is substantially constant with respect to the sliding direction. The outside diameter of the sleeve 383 is set substantially the same as the inside diameter of the fitting hole 63. On the other hand, the sleeve 383 is formed such that the inside diameter gradually becomes smaller from an end portion on the fixing bolt 77 side toward an end portion on the opposite side, with respect to the sliding direction. That is, the sleeve 383 is formed such that a thickness gradually becomes thicker from the end portion on the fixing bolt 77 side toward the end portion on the opposite side. As a result, a tapered surface 383a is formed on the inner peripheral surface of the sleeve 383. The sleeve 383 is provided in a predetermined position inside the fitting hole 63, and is fixed to the mounting 6 so as not to move relative thereto.

The slide pin 380 has a tapered portion 380a formed such that an outside diameter gradually becomes smaller from a base end portion on the fixing bolt 77 side toward a tip end portion, with respect to the sliding direction. The slide pin 380 has a tapered shape with an inclination angle corresponding to an inclination angle of the tapered surface 383a of the sleeve 383, on the tapered portion 380a.

The slide pin 380 of the slide mechanism 308 structured as described above is inserted into the tapered surface 383a side of the sleeve 383 provided inside the fitting hole 63. As a result, the slide mechanism 308 is able to slidably support the first cylinder member 70 on the mounting 6 via the slide pin 380. In this case, the sleeve 383 forms a portion of the fitting hole (recessed portion) 63 that slidably supports the slide pin 380. As a result, the adjustment mechanism 382 is able to fill the clearance between the fitting hole 63 and the slide pin 380 by the sleeve 383 being interposed between the fitting hole 63 and the slide pin 380.

Here, the taper amount of the tapered surface 383a of the sleeve 383 is set to be equal to the maximum tolerance of a pin clearance, and is such that the sleeve 383 will always fit in any position of the tapered portion 380a of the slide pin 380. The taper amount of the tapered surface 383a corresponds to the difference between the maximum inside diameter and the minimum inside diameter of the sleeve 383. The pin clearance corresponds to the difference between the inside diameter of the fitting hole 63 and the outside diameter of the slide pin 80.

Also, the taper amount of the tapered portion 380a of the slide pin 380 is set such that the sleeve 383 is in a position that easily fits by at least a cylinder movement amount L2 when the pads wear from the opening of the fitting hole 63. As a result, the slide mechanism 308 is able to appropriately support the cylinder 7 even when the friction pads 3, 4 wear. The taper amount of the tapered portion 380a corresponds to the difference between the maximum outside diameter and the minimum outside diameter of the tapered portion 380a.

Also, a width L3 along the sliding direction, and the mounting position of the sleeve 383 with respect to the sliding direction, are set such that a center of gravity G in a non-braking position of the cylinder 7 that is supported by the slide pin 380 is positioned within the range of the sleeve 383. As a result, the slide mechanism 308 is able to inhibit the cylinder 7 from tilting by its own weight when the cylinder 7 is in the non-braking position.

Also, the sleeve 383 has a notch 383b. This notch 383b extends from one end portion to the other end portion of the sleeve 383 along the sliding direction. As a result, the sleeve 383 is able to be made to have room with respect to deformation by absorbing deformation during assembly into the fitting hole 63 with the notch 383b. Also, the notch 383b of this sleeve 383 also functions as an air vent of a space on the closed-off side of the fitting hole 63.

The slide mechanism 308 structured as described above is able to reduce the clearance between the fitting hole 63 and the slide pin 380 by the sleeve 383 of the adjustment mechanism 382. Therefore, the slide mechanism 308 is able to reliably restrain the slide pin 380 inside the fitting hole 63 with the sleeve 383. Therefore, because the disc brake device 301 and the caliper 305 are able to more reliably restrain the slide pin 380 inside the fitting hole 63 with the adjustment mechanism 382 in the slide mechanism 308, they are able to further improve rattle noise reduction performance.

The disc brake device 301 and the caliper 305 according to the example embodiment described above are able to achieve both a reduction of rattle noise and a reduction of moan noise at the same time, and thus are able to appropriately reduce abnormal noise, by having the first cylinder member 70 and the second cylinder member 71 be formed separately, and allowing the second cylinder member 71 to pivot with respect to the first cylinder member 70 by the pivot mechanism 72.

Also, the disc brake device 301 and the caliper 305 according to the example embodiment described above are able to reliably retain the slide pin 380 inside the fitting hole 63 with the adjustment mechanism 382, and thus are able to further improve rattle noise reduction performance, even if the manufacturing accuracy of the fitting hole 63 and the slide pin 380 and the like is low.

The adjustment mechanism 382 of this example embodiment may also have a sleeve 383A that is split into a plurality of sections, as shown in the modified example in FIG. 13 and FIG. 14, and the slide mechanism 308 may include a slide pin 380A that corresponds to this.

In this case, the sleeve 383A is split into a plurality of sections (three here) along the sliding direction. A slide pin 380A has a protruding portion 380b formed along in the sliding direction on the tapered portion 380a. The protruding portion 380b is provided in plurality (three here) at equal intervals along a circumferential direction of the tapered portion 380a. The slide pin 380A is such that the tapered portion 380a and the protruding portions 380b are integrally formed. Also, the protruding portions 380b are positioned between the sleeves 383A that are adjacent in the circumferential direction, and the slide pin 380A is inserted inside the sleeve 383A.

In this case as well, the adjustment mechanism 382 is able to fill the clearance between the fitting hole 63 and the slide pin 380A, and thus is able to reliably restrain the slide pin 380A, by the sleeve 383A being interposed between the fitting hole 63 and the slide pin 380A.

[Fourth example embodiment]

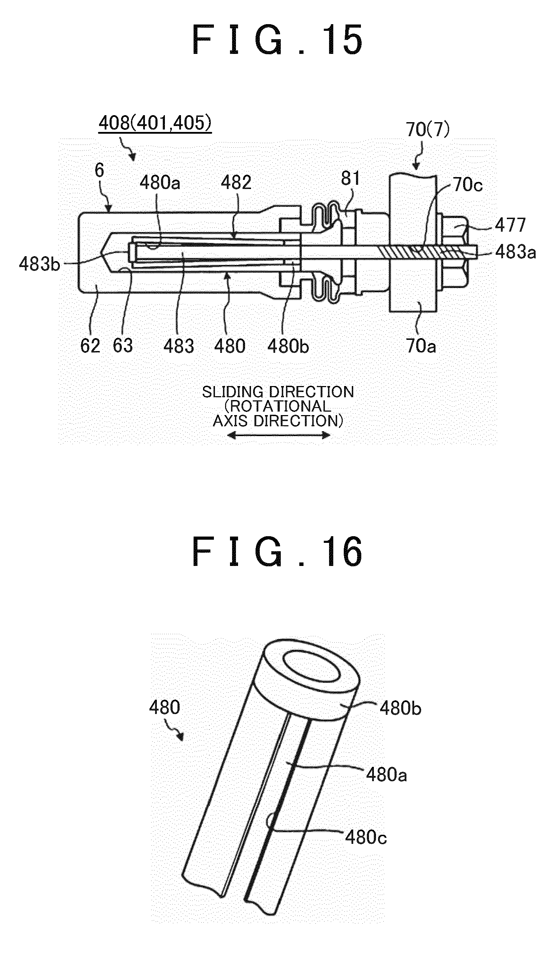

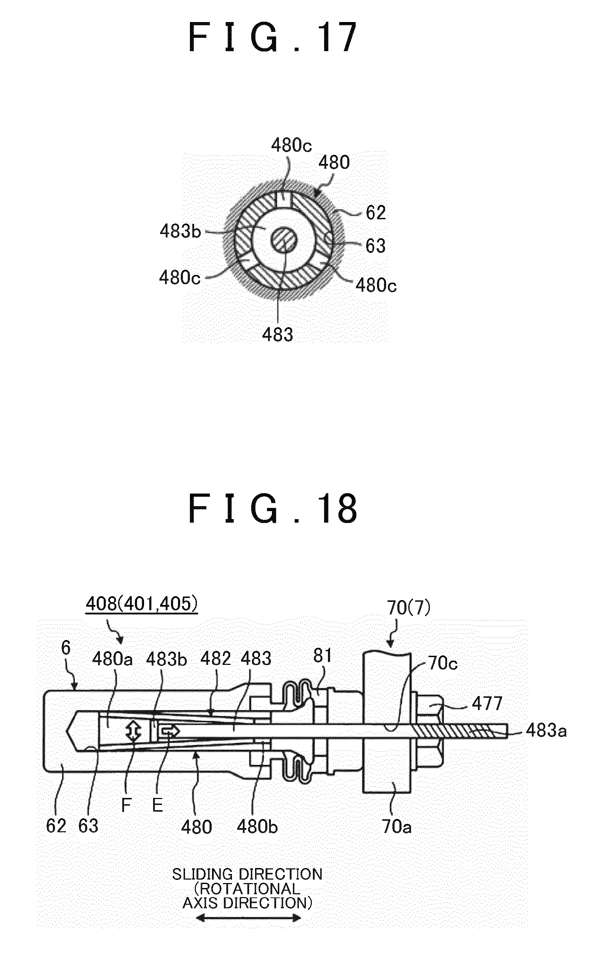

FIG. 15 is a partial sectional view that includes a slide mechanism of a disc brake device according to a fourth example embodiment. FIG. 16 is a perspective view showing the general structure of a slide pin of the disc brake device according to the fourth example embodiment. FIG. 17 is a radial sectional view of the slide pin of the disc brake device according to the fourth example embodiment. FIG. 18 is a partial sectional view showing the operation of the slide mechanism of the disc brake device according to the fourth example embodiment. The structure of the adjustment mechanism of the disc brake device and the caliper according to the fourth example embodiment differs from that in the second and third example embodiments.

As shown in FIG. 15, a caliper 405 of a disc brake device 401 includes a slide mechanism 408. The slide mechanism 408 of this example embodiment is formed having a fitting hole 63 and a slide pin 480, as well as an adjustment mechanism 482.

The adjustment mechanism 482 adjusts the clearance between the fitting hole 63 and the slide pin 480. The adjustment mechanism 482 of this example embodiment adjusts the clearance between the fitting hole 63 and the slide pin 480 by pushing the slide pin 480 against the inside wall of the fitting hole 63. Here, the adjustment mechanism 482 is also a clearance reducing mechanism that reduces the clearance by pushing the slide pin 480 against the inside wall of the fitting hole 63. The adjustment mechanism 482 is formed including an extension member 483.

Here, the slide pin 480 of this example embodiment has a hollow portion 480a inside, as shown in FIG. 15, FIG. 16, and FIG. 17, and is a structure that is able to extend from this hollow portion 480a toward a radial outside. The slide pin 480 is formed in an overall cylindrical shape, and is split into a plurality (three here) of sections along the sliding direction. More specifically, the slide pin 480 has a cylindrical portion 480b on a base end portion side in the sliding direction, and a plurality (three here) of slits 480c is formed from this cylindrical portion 480b toward a tip end portion along the sliding direction. Therefore, the slide pin 480 is able to have an extendable structure by pushing out from the hollow portion 480a toward the radial outside. As a result, the slide pin 480 is able to have a structure in which the outside diameter is able to be changed.

Also, the extension member 483 of the adjustment mechanism 482 pushes out the slide pin 480 to the outside from inside the hollow portion 480a. The extension member 483 is formed by a bolt or the like in which a thread groove 483a is formed on one end, and an abutting portion 483b is formed on the other end, for example. The extension member 483 is arranged such that the abutting portion 483b is inserted inside the slide pin 480 so as to be positioned on the hollow portion 480a side of the slide pin 480, and the thread groove 483a is exposed on the arm portion 70a side via the bolt hole 70c and the like. The slide mechanism 408 is such that the arm portion 70a and the slide pin 480 are fastened together by a nut 477 being screwed onto the thread groove 483a of this extension member 483.

In the adjustment mechanism 482 structured as described above, by tightening the nut 477, the extension member 483 moves in the sliding direction by the screw action, and the abutting portion 483b inside the hollow portion 480a comes closer to the cylindrical portion 480b side, as shown by arrow E in FIG. 18. As a result, the adjustment mechanism 482 is able to push the slide pin 480 outside from inside the hollow portion 480a by the abutting portion 483b of the extension member 483, as shown by arrow F in FIG. 18. Therefore, the adjustment mechanism 482 is able to generate force that pushes the slide pin 480 against the inside wall of the fitting hole 63.

As a result, this slide mechanism 408 is able to fill in the clearance between the fitting hole 63 and the slide pin 480 so that it is small by the adjustment mechanism 482, so the slide pin 480 is able to be reliably restrained inside the fitting hole 63 by the adjustment mechanism 482. Therefore, because the disc brake device 401 and the caliper 405 are able to more reliably restrain the slide pin 480 inside the fitting hole 63 with the adjustment mechanism 482 in the slide mechanism 408, they are able to further improve rattle noise reduction performance.

The disc brake device 401 and the caliper 405 according to the example embodiment described above are able to achieve both a reduction of rattle noise and a reduction of moan noise at the same time, and thus are able to appropriately reduce abnormal noise, by having the first cylinder member 70 and the second cylinder member 71 be formed separately, and allowing the second cylinder member 71 to pivot with respect to the first cylinder member 70 by the pivot mechanism 72.

Also, the disc brake device 401 and the caliper 405 according to the example embodiment described above are able to reliably retain the slide pin 480 inside the fitting hole 63 with the adjustment mechanism 482, and thus are able to further improve rattle noise reduction performance, even if the manufacturing accuracy of the fitting hole 63 and the slide pin 480 and the like is low.

[Fifth example embodiment]

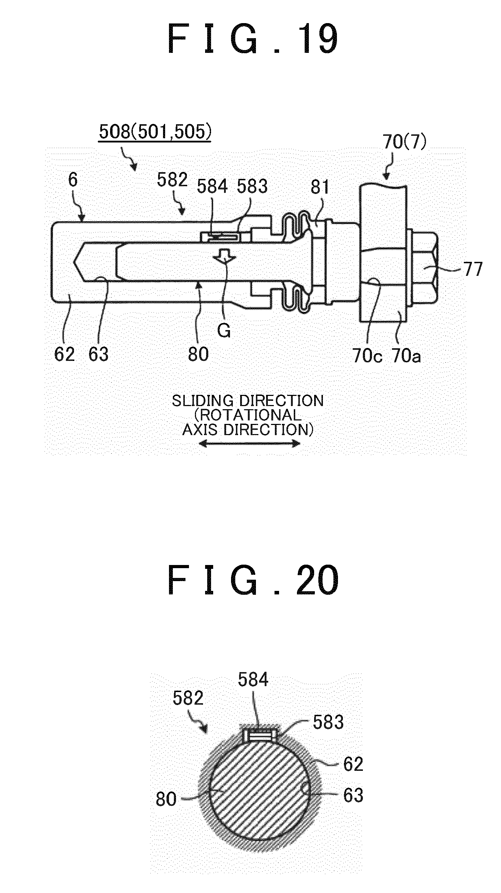

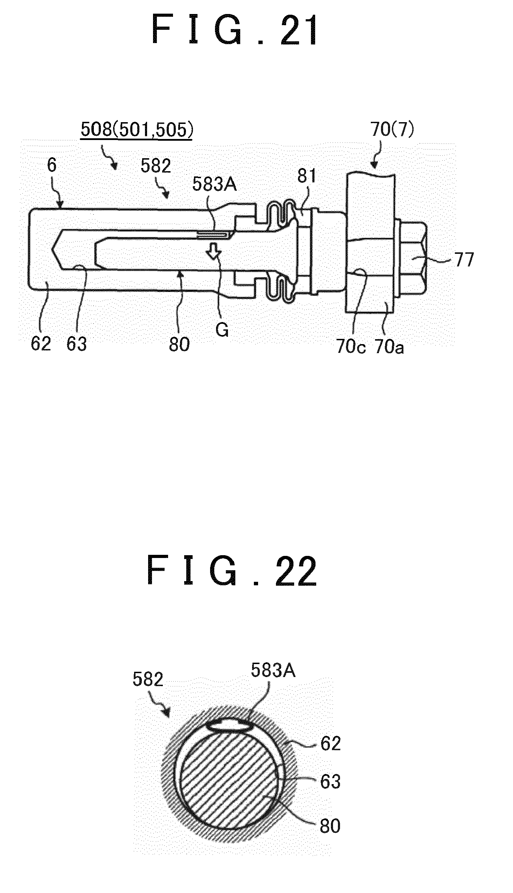

FIG. 19 is a partial sectional view that includes a slide mechanism of a disc brake device according to a fifth example embodiment. FIG. 20 is a radial sectional view of a slide pin of the disc brake device according to the fifth example embodiment. FIG. 21 is a partial sectional view that includes a slide mechanism of a disc brake device according to a modified example. FIG. 22 is a radial sectional view of a slide pin of the disc brake device according to the modified example. The structure of the adjustment mechanism of the disc brake device and the caliper according to the fifth example embodiment differs from that in the second, third, and fourth example embodiments.

As shown in FIG. 19 and FIG. 20, a caliper 505 of a disc brake device 501 of this example embodiment includes a slide mechanism 508. The slide mechanism 508 in this example embodiment is formed having a fitting hole 63 and a slide pin 80, as well as an adjustment mechanism 582.

The adjustment mechanism 582 adjusts the clearance between the fitting hole 63 and the slide pin 80. The adjustment mechanism 582 of this example embodiment adjusts the clearance between the fitting hole 63 and the slide pin 80 by pushing the slide pin 80 against one inside wall of the fitting hole 63.

The adjustment mechanism 582 has a plate spring 583 as an elastic member. The adjustment mechanism 582 is arranged inside a housing groove 584 provided in a portion of the inside wall inside the fitting hole 63. The plate spring 583 generates force that pushes the slide pin 80 against one inside wall inside the fitting hole 63 by the urging force thereof, as shown by arrow G in FIG. 19. The load of the plate spring 583 is typically set such that a contact load of the slide pin 80 becomes larger than 0 [N]. This plate spring 583 is arranged in a positional relationship in which the forces that push the slide pins 80 are forces in opposite directions from each other, in the pair of slide mechanisms 508.

As a result, this slide mechanism 508 able to reliably restrain the slide pin 80 in the fitting hole 63 with the adjustment mechanism 582 by the plate spring 583 pushing the slide pin 80 against the inside wall of the fitting hole 63, even without making the clearance between the fitting hole 63 and the slide pin 80 as small as possible in the machining stage, for example. Therefore, because the disc brake device 501 and the caliper 505 are able to more reliably restrain the slide pin 80 inside the fitting hole 63 with the adjustment mechanism 582 in the slide mechanism 508, they are able to further improve rattle noise reduction performance.

The disc brake device 501 and the caliper 505 according to the example embodiment described above are able to achieve both a reduction of rattle noise and a reduction of moan noise at the same time, and thus are able to appropriately reduce abnormal noise, by having the first cylinder member 70 and the second cylinder member 71 be formed separately, and allowing the second cylinder member 71 to pivot with respect to the first cylinder member 70 by the pivot mechanism 72.

Also, the disc brake device 501 and the caliper 505 according to the example embodiment described above are able to reliably restrain the slide pin 80 inside the fitting hole 63 with the adjustment mechanism 582, and thus are able to further improve rattle noise reduction performance, even if the manufacturing accuracy of the fitting hole 63 and the slide pin 80 and the like is low.

The adjustment mechanism 582 of this example embodiment may not include the housing groove 584 (see FIG. 19 and FIG. 20), and may be provided with a plate spring 583A as an elastic member directly inside of the fitting hole 63, as shown in the modified example in FIG. 21 and FIG. 22. In this case as well, the slide mechanism 508 is able to reliably restrain the slide pin 80 inside the fitting hole 63 with the adjustment mechanism 582, by the plate spring 583A pushing the slide pin 80 against the inside wall of the fitting hole 63.

The disc brake device and the caliper according to the example embodiments of the invention described above are not limited to the example embodiments described above. Various modifications are possible within the scope of the claims. The disc brake device and the caliper according to this example embodiment may also be formed by suitably combining the constituent elements of the example embodiments described above.

The slide mechanism described above is described as having a slide pin that is provided on a second member (the first cylinder member 70), inserted into a recessed portion provided on a first member (the mounting 6), but it is not limited to this. The slide mechanism may also be formed with a slide pin that is provided on the first member (the mounting 6), inserted into a recessed portion provided on the second member (the first cylinder member 70). In this case, the slide pin is assembled on the first member (the mounting 6).

In the description above, a pivot shaft is described as being provided on the second member (the first cylinder member 70), but it is not limited to this. The pivot shaft may also be provided on a third member (the second cylinder member 71), and relatively pivotally support the third member on the second member by being inserted into a shaft hole formed in the second member.

DESCRIPTION OF THE REFERENCE NUMERALS

| 1, 201, 301, 401, 501 | DISC BRAKE DEVICE |
|---|---|
| 2 | DISC ROTOR |
| 3, 4 | FRICTION PAD |
| 5, 205, 305, 405, 505 | CALIPER |
| 6 | MOUNTING (FIRST MEMBER) |
| 7 | CYLINDER |
| 8, 208, 308, 408, 508 | SLIDE MECHANISM |
| 31, 41 | FRICTION ELEMENT |
| 60 | SUSPENSION (FIXED PORTION) |
| 61 | MOUNTING SURFACE |
| 63 | FITTING HOLE (RECESSED PORTION) |
| 70 | FIRST CYLINDER MEMBER (SECOND MEMBER) |
| 71 | SECOND CYLINDER MEMBER (THIRD MEMBER) |
| 72 | PIVOT MECHANISM |
| 73 | PRESSING ACTUATOR |
| 74 | PISTON (PRESSING MEMBER) |
| 78 | PIVOT SHAFT |
| 80, 380, 380A, 480 | SLIDE PIN |
| 282, 382, 482, 582 | ADJUSTMENT MECHANISM |
| 283 | PUSHING PORTION |
| 383,383A | SLEEVE |
| 480a | HOLLOW PORTION |
| 483 | EXTENSION MEMBER |
| 583, 583a | PLATE SPRING (ELASTIC MEMBER) |
| 584 | HOUSING GROOVE |
| X1 | ROTATIONAL AXIS |
| X2 | PIVOT AXIS |

**Claims**

1. A disc brake device **characterized by** comprising:

    a disc rotor that rotates around a rotational axis;
    a friction pad that opposes a friction surface of the disc rotor;
    a first member provided on a fixed portion on a vehicle body side;
    a second member that is slidably supported via a slide mechanism with respect to the first member; and
    a third member that holds the friction pad, and is pivotally supported, with a pivot axis along a radial direction of the disc rotor as a pivot center, via a pivot mechanism with respect to the second member.

2. The disc brake device according to claim 1, wherein
    the pivot axis is parallel to a mounting surface of the first member and the fixed portion.

3. The disc brake device according to claim 1 or claim 2, wherein
    the pivot axis passes through the rotational axis of the disc rotor.

4. The disc brake device according to any one of claims 1 to 3, wherein
the pivot axis is orthogonal to the rotational axis of the disc rotor.

5. The disc brake device according to any one of claims 1 to 4, comprising:

   a pressing member that presses the friction pad against the friction surface of the disc rotor,
   wherein the pivot axis passes through a range where the pressing member presses the friction pad, with respect
   to a circumferential direction of the rotational axis of the disc rotor.

6. The disc brake device according to any one of claims 1 to 5, wherein
the slide mechanism has a recessed portion provided on one of the first member or the second member, a slide pin
that is provided on the other of the first member or the second member and is inserted into the recessed portion,
and an adjustment mechanism that adjusts a clearance between the recessed portion and the slide pin.

7. The disc brake device according to claim 6, wherein
the adjustment mechanism reduces the clearance.

8. The disc brake device according to claim 6, wherein
the adjustment mechanism pushes the slide pin against an inside wall of the recessed portion.

9. The disc brake device according to claim 6 or claim 8, wherein
the adjustment mechanism has a pushing portion that is provided on one end portion side of the slide pin, and
generates a force that pushes the slide pin against one inside wall of the recessed portion by being pushed against
the other of the first member or the second member outside of the recessed portion.

10. The disc brake device according to claim 6 or claim 7, wherein
the adjustment mechanism has a sleeve that is provided inside the recessed portion, and is interposed between
the recessed portion and the slide pin.

11. The disc brake device according to any one of claims 6 to 8, wherein
the slide pin has a hollow portion inside; and
the adjustment mechanism has extension portion that pushes out the slide pin to an outside from inside the hollow
portion.

12. The disc brake device according to claim 6 or claim 8, wherein
the adjustment mechanism has an elastic member that is provided inside the recessed portion, and generates a
force that pushes the slide pin against one inside wall of the recessed portion.

13. A caliper that holds a friction pad opposing a friction surface of a disc rotor that rotates around a rotational axis,
**characterized by** comprising:

    a first member provided on a fixed portion on a vehicle body side;
    a second member that is slidably supported via a slide mechanism with respect to the first member; and
    a third member that holds the friction pad, and is pivotally supported, with a pivot axis along a radial direction
    of the disc rotor as a pivot center, via a pivot mechanism with respect to the second member.

# FIG.1

# FIG.2

INSIDE

RADIAL
DIRECTION

OUTSIDE

X1

SLIDING DIRECTION
(ROTATIONAL
AXIS DIRECTION)

# FIG.3

# FIG.4

# FIG.5

FIG. 6

F I G . 7

EP 2 787 239 A1

# F I G . 8

SLIDING DIRECTION
(ROTATIONAL
AXIS DIRECTION)

# F I G . 9

# F I G . 10

# FIG.11

308(301,305)    G         70(7)
6      382    L3   L2   81
                                    77
62  63  380a  383  383a
         380
         70c  70a

SLIDING DIRECTION
(ROTATIONAL
AXIS DIRECTION)

# FIG.12

383b
380a
380          62
383a         63
383

# FIG.13

SLIDING DIRECTION
(ROTATIONAL
AXIS DIRECTION)

# FIG.14

# F I G . 15

408(401,405)

70(7)

6  480a  482  81  70c

477

483b  483a

62 63  483  480  480b  70a

SLIDING DIRECTION
(ROTATIONAL
AXIS DIRECTION)

# F I G . 16

480

480b

480a

480c

# F I G . 17

480c
480
483b
62
63
480c
480c
483

# F I G . 18

408(401,405)
70(7)
6
480a 483b 482 483
81
70c
477
483a
62 63
F E
480 480b
70a

SLIDING DIRECTION
(ROTATIONAL
AXIS DIRECTION)

# F I G . 19

508(501,505)

6  582  584  583  81  70(7)

62  63  80  G  70c  70a

77

SLIDING DIRECTION
(ROTATIONAL
AXIS DIRECTION)

# F I G . 20

584

582  583

62

80  63

# F I G . 21

508(501,505)    70(7)

6    582    583A    81

62  63    80    G    70c 70a    77

# F I G . 22

582    583A

62

63

80

## INTERNATIONAL SEARCH REPORT

| International application No. |
|---|
| PCT/JP2011/077968 |

**A. CLASSIFICATION OF SUBJECT MATTER**
*F16D55/224*(2006.01)i

According to International Patent Classification (IPC) or to both national classification and IPC

**B. FIELDS SEARCHED**

Minimum documentation searched (classification system followed by classification symbols)
F16D55/224

Documentation searched other than minimum documentation to the extent that such documents are included in the fields searched
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 07-305734 A (Toyota Motor Corp.), 21 November 1995 (21.11.1995), paragraphs [0013] to [0022]; fig. 1 to 4 (Family: none) | 1-13 |
| A | JP 2004-509302 A (Robert Bosch GmbH), 25 March 2004 (25.03.2004), paragraphs [0013] to [0023]; fig. 1 to 2 & US 2004/0245056 A1 & WO 2002/025137 A2 | 1-13 |
| A | JP 60-109626 A (Nissan Motor Co., Ltd.), 15 June 1985 (15.06.1985), page 2, upper right column, line 10 to lower right column, line 13; fig. 4 & US 4591028 A & EP 145977 A1 | 1-13 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 February, 2012 (23.02.12) | 06 March, 2012 (06.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 787 239 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005220942 A